(19) Europäisches Patentamt
European Patent Office
Office européen des brevets

(11) **EP 2 781 912 B1**

(12) **EUROPEAN PATENT SPECIFICATION**

(45) Date of publication and mention
of the grant of the patent:
**05.05.2021 Bulletin 2021/18**

(51) Int Cl.:
***G01N 21/95*** *(2006.01)*

(21) Application number: **13159991.2**

(22) Date of filing: **19.03.2013**

(54) **Inspection system**

Überprüfungssystem

Système d'inspection

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.09.2014 Bulletin 2014/39**

(73) Proprietor: **Hennecke Systems GmbH
53909 Zülpich (DE)**

(72) Inventors:
• **Piskorski, Gregor
52396 Heimbach (DE)**

• **Jansen, Stephan
53940 Hellenthal (DE)**
• **Esser, Thomas
52391 Vettweiß (DE)**

(74) Representative: **Patentbüro Paul Rosenich AG
BGZ
9497 Triesenberg (LI)**

(56) References cited:
**EP-A1- 2 256 796        EP-A1- 2 600 140
DE-A1-102009 010 837    US-A1- 2003 179 369
US-A1- 2011 263 049     US-B1- 6 201 899
US-B1- 8 023 110**

## Description

The invention relates to an inspection method for inspecting flat semiconductor objects, such as wafer, solar cells or intermediate stages thereof, in respect of defects, particularly defects on chamfers or slanted edges. Particularly the invention relates to the inspection of the leading and trailing edges of flat photosensitive semiconductor devices, especially silicon wafers and solar cells on the fly without handling such as stopping or rotating the object or moving the inspection system or parts thereof. The invention also relates to an inspection system for inspecting flat semiconductor objects.

Quality control devices for wafers in the photovoltaic industries are known in prior art (e.g. from Hennecke Systems GmbH).

Such inspection modules are adapted for measuring mono and multi crystalline wafers from e.g. 125mm x 125mm up to 210mm x 210mm or larger.

The following parameters can be measured with the Hennecke Systems Wafer Inspection Module:

- Thickness, TTV (Total Thickness Variation = difference of the maximum thickness value and the minimum thickness value of silicon wafers)
- Saw marks (saw marks = grooves on the wafer surfaces, which are generated during the sawing process by a wire saw)
- Edge defects (edge defects = material breakouts at the wafer edges)
- Chippings (chipping = wafer surface spall)
- Resistivity (resistivity = specific electrical resistance of a wafer)
- Stain (stain = visible dirt area on the wafer surface)
- Micro Crack / Inclusions (inclusions = carbon inclusions, generated during the growing process of silicon ingots)
- Geometry (geometry = dimensions in length and width of a wafer, rectangularity, parallelism)
- Sori, Bow (sori = waviness of the wafer surface, bow = difference of the highest point of one wafer surface to the lowest one of the same wafer surface)
- Lifetime (lifetime = lifetime of the minority carriers inside the wafer. The result is an indication of the degree of the wafer's contamination)
- Grain size (grain size = sizes of the different silicon grains a multi crystalline silicon wafer consists of).

With the standard Hennecke edge defect detection system it is possible to detect v-type breakages and chippings on all four wafer edges. It is an optical measurement system. To detect defects on the wafer edges there are installed two line scan cams with a resolution of 7500 pixels and a maximum trigger frequency of 4 kHz. Thus the maximum resolution for the edge inspection is $28\mu$m/pixel for the edges which are aligned crosswise to the running direction and $55\mu$m/pixel for the edges that are aligned in running direction. Two line scan illuminators are mounted with an angle of 45° to the wafer surface. Each line scan camera is positioned perpendicular to one of the two wafer surfaces (see figure 15). The optical axis of each line scan camera is positioned perpendicular to one of the two wafer surfaces. The wafers are continuously transported by a conveyor belt in a plane transport path in a transport direction.

Due to the fact that in the standard edge defect system the cams are aligned perpendicularly to the wafer surfaces, some edge defects that don't extend to the top or the bottom wafer surface can't be detected.

A further drawback is the different chip detection sensitivity according to the location of the chippings. Due to the angle of illumination of 45° partially directed in transport direction the leading edge and the trailing edge of the wafers are illuminated in different ways, meaning that the chance to detect chips on the trailing edge is higher than to detect chippings on the leading edge.

Edge inspection system of the company Yasunaga

With Yasunaga's edge inspection system it is possible to examine the lateral wafer edges from the top and bottom surface as well as from the edge site. At the lateral sides of the transport path there are installed mirrors to diffract the light in that way, that it is possible to grab images from the top, bottom and edge side with only one line scan cam. This constitutes a first inspection unit. However, it is not possible to inspect at the same time the leading and/or trailing edge of the wafer. In order to also inspect the leading and trailing edge of the wafer, the wafer has to be rotated by 90° and a second inspection unit has to be provided downstream of the first inspection unit and the rotation procedure.

The drawback of that edge inspection system is the extra wafer stressing rotating procedure. The 90° rotation is necessary to inspect all four wafer edges with the Yasunaga edge inspection system. Moreover, the rotating station requires much space. EP1348947A1 discloses an apparatus for semiconductor wafer edge Inspection. The device comprises an elliptical mirror, a light source that radiates coherent light towards an inspected edge, a light blocking member that blocks diffracted light of a low order that Is radiated from the light source and reflected by the inspected edge and a photo detector. The wafer as such is rotated but not transported during the inspection process. The edge of the wafer projects through a gap of the apparatus. Such a procedure Is very complicated and time consuming since each wafer has to be arranged such that the edge of the wafer projects through the gap of the inspection apparatus. This kind of inspection is only suitable for circular wafers. Furthermore, detection, location and determination of wafer damages are inaccurate since this method Is not based on Imaging technique.

DE202004020330U1 and WO2007144671A1 do not relate to the technical field of Inspecting flat photosensitive semiconductor objects. Here, glass plates are Inspected by means of a camera. However, these documents do not disclose a transport means for transporting the glass plates and that the leading and/or trailing edge are detected during their transport on the transport means.

WO2006093381A1 also does not relate to the technical field of inspecting flat photosensitive semiconductor objects and discloses an apparatus and a method for inspecting edge defect and discoloration of glass substrate. The method is performed by means of cameras imaging the glass substrate from above. Reliable edge detection during the transport of the glass substrate is not possible with the apparatus disclosed In WO20060933S1 A1.

From our own patent application with application number EP11191122 it was known to look at the wafer edges under an angle to plane of the wafer that normally coincides with the plane the wafer is transported in. It was found that this system can be improved in respect to the following aspects;

Camera systems have limited depth of field. Meaning that if the inspected wafers are not quadratic (which they almost never are for mono-crystalline solar cell, because they have large chamfers) the slanted regions (chamfers) are not imaged with the desired sharpness.

US20110263049A1 dicloses a wafer edge inspection wherein an imaging device captures at least one image of an edge of a wafer. The at least one image can be analyzed in order to identify an edge bead removal line, An illumination system having a diffuser can further be used in capturing images. The wafer is held stationary and only rotated at the Inspection location and images are taken from the edge sections rotating past the image sensor(s) arranged near the edge region. The depth of field of at least one sensor within the plane of the wafer is adjusted to get a series of images of the edge region showing a wide edge strip in clearly focussed **manner**

US 6,201,899 B1 discloses a method for constructing an extended depth of field image from a plurality of source images taken of an object at substantially identical fields of view but at differing focal distances. According to one embodiment the object is moved by a moving platform.

DE 10 2009 010 837 A1 discloses a method and a corresponding system for inspecting existence of sawing grooves on wafers utilized for manufacturing solar cells, involves evaluating wafer based on images of partial region at short exposure time. Thereby a plurality of images of the wafers are captured during the movement of the wafers along a transport path with a matrix-camera.

US 8,023,110 B1 A1 discloses a methods and systems for determining the quality of a substrate by examining whether bending is present at the edged of a substrate. The substrates are thereby transported along a longitudinal transport direction and light reflected from the surface is detected by a detector. The detector can also be implemented by an imaging system.

US 2003/0179369 A1 discloses a system for inspecting a specimen, such as a semiconductor wafer that uses a laser light source for providing a beam of light. The specimen is transported along a longitudinal transport direction. The beam is applied to a traveling lens acousto-optic device having an active region and responsive to an RF input signal to selectively generate plural traveling lenses in the active region. The traveling lens acousto-optic device is operative to receive the light beam and generate plural flying spot beams, at the respective focus of each of the generated traveling lenses. A light detector unit, having a plurality of detector sections, each detector section having a plurality of light detectors and at least one multi-stage storage device operative to receive in parallel an input from the plurality of light detectors, is used to generate useable scan data.

The object of the Invention Is to overcome these problems of the prior art systems and to provide an inspection system for inspecting the leading and/or trailing edges of flat bjects without changing their orientation on the transport means. Furthermore, the inspection procedure shall be sensitive and reliable to any kind of defects, particularly, better at detecting defects on chamfers or slanted edges than systems known from prior art. The inspection system shall be a cost effective alternative to the described systems while still not disturbing the flow of the inspected objects.

This object is achieved by means of an inspection method as defined in claim 1.

The term 'recognizing' , as used in claim 1, comprises the meaning that defects are identified as such. In a further step it is possible to evaluate the identified defects with respect to their shapes, dimensions and positions.

The depth of field (DOF) or depth of sharpness is the distance between the nearest and farthest object points in a scene (in the present case: flat object) that will record as sharp.

In connection with a line scan camera as an example of the imaging system one recorded line is regarded as one image. Recording of multiple lines corresponds to 'taking sequentially a plurality of images'.

The leading edge and trailing edge of flat object may be straight, but also curved e.g. in the case of circular wafers. The plane of flat object is parallel to the transport plane of transport means, e.g. the flat surface of a conveyor belt. The transport direction is preferably longitudinal, i.e. essentially straight, at least in the region in which the plurality of images is sequentially taken from the flat object.

The object of the invention is essentially achieved by only using pixels lying within the depth of field of the imaging system, meaning that for evaluation of defects only those parts of the image(s) are used that have a given distance to the imaging sensor. This can be achieved by:

- Measuring the distance to the pixels and this identifying them can be done by e.g. 3D cameras. If a grey level images is required for detecting the edge defects, the 3D camera would have to provide this information as well (time-of-flight cameras normally also provide this information). Alternatively a second grey-level camera possibly with higher resolution can take the grey-level images;

- Determining or measuring the position of the wafer and from its known geometry and/or an initial position and its speed deducing the position of the relevant pixels;

- Evaluating the sharpness in the image and only using those regions of the image(s) that are sharp enough; or

- Only the edges of the wafer may be illuminated so that only they appear bright in the image and can be isolated quite easily, e.g. using a threshold filter. If a line camera (also (TDI) line scan camera) is used, consecutive images shown consecutive portions of the wafer edge. This of cause depends on the speed of the wafer. When using a camera with a 2D pixel array, multiple rows of sharp pixels in the image may be used. Now consecutive images may be fit together based on the pixels of different rows in the image. With rows a 1D array of pixels is meant that is imaged more or less parallel to the wafer edge to be inspected.

Evaluating defects of flat object essentially by means of the selected image data means that only or mainly those image data, i.e. pixels, are used for evaluation of geometrical defects which are taken from object points of the flat object within the depth of field of the imaging system. In other words, recognition of defects is performed on the basis of those selected image data. The other image data (i.e. the other parts of the image) which are taken from object points outside of the depth of field are not taken into account (some image processing may be needed to be done on pixels outside the sharp ranges of the image to blind those pixels out) when evaluating the defects of flat object. The term 'essentially' takes into account possible inaccuracies of the selection step, e.g. pixels in immediate vicinity of the depth of field may be selected too. However, the main part of the image data that are taken from object points outside of the depth of field are not taken into account for evaluation of the defects of flat object.

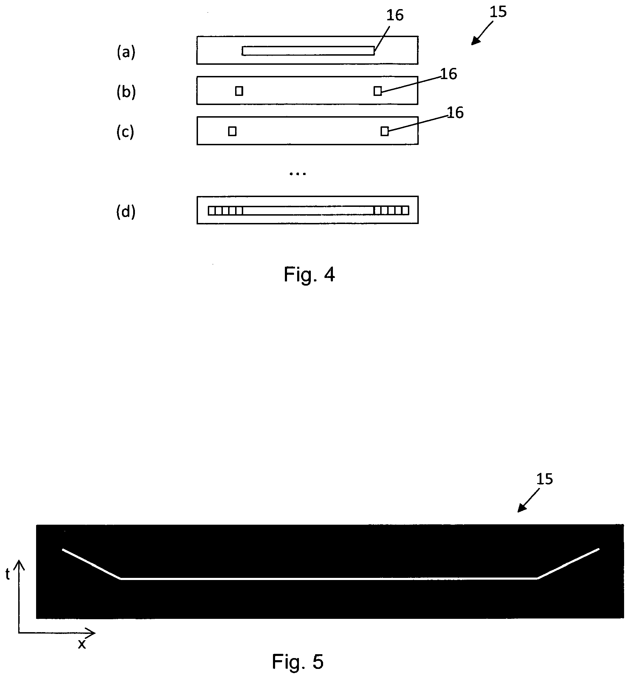

It was found that multiple images should be made for different stages/positions of the wafer on the transportation device and from these images only the sharp pixels are used for recognizing defects of the wafer edges. In this way pixels from one image may be processed (normally a couple of adjacent pixels are sharp in the same image) or pixels from multiple images may be used. In the latter case, pixels from multiple images may be put together to form one image (see Fig. 5).

In this way the leading and trailing edges of the wafers may be imaged with the desired sharpness even if the wafers are not square and or their leading and/or trailing edges do not extend perfectly perpendicular to the transport direction.

Using a line scan camera (that usually has high resolution) ensures the desired frame rate. Further, since the observation angle of the camera must be larger than zero (otherwise the wafer would collide with the camera or the wafer would have to change direction) the distance to the sharp edge pixels seen by the camera stays constant.

In order to easily know what pixels are sharp and what pixels are not, the distance from the object (portion of the wafer edge) to the camera may be determined or the distance may be known a priori. From the shape of the wafer, it can be calculated what pixels are sharp.

Alternatively only the parts of the wafer are depicted sharply are visible in the image. This can be achieved by illuminating the edge of the wafer and making sure that the pixels that are seen of the edge are in focus. This is preferably achieved by using a line scan camera with its sharp imaging distance just above the conveyor belt.

A mirror arrangement may be used to divide the field of view of that camera and thus image the leading and trailing edges with one sensor. A mirror may also be used to deflect the line of sight of the camera or line sensor so that a smaller observation angle can be achieved since the sensor does not obstruct the movement of the wafers.

Preferably, the object plane (or focal plane) of the imaging system is tilted with respect to the plane of flat object during the movement of flat object along the transport path. The object plane or focal plane of an imaging system is defined as a plane perpendicular to the optic axis of the observation path, which passes through the focal points of the imaging system. The object plane or focal plane is that plane from which object points of flat object are imaged sharply. Preferably, the depth of field stays constant during the step of taking sequentially a plurality of images, while the flat object continuously moves through the object plane of the imaging system. The plane of flat object is defined as a plane being parallel to the front (top) or back side of flat object (extending between its edges). The object plane or focal plane may not be completely flat due to the optics used, but can at least near the optical axis be considered flat for all practical purposes.

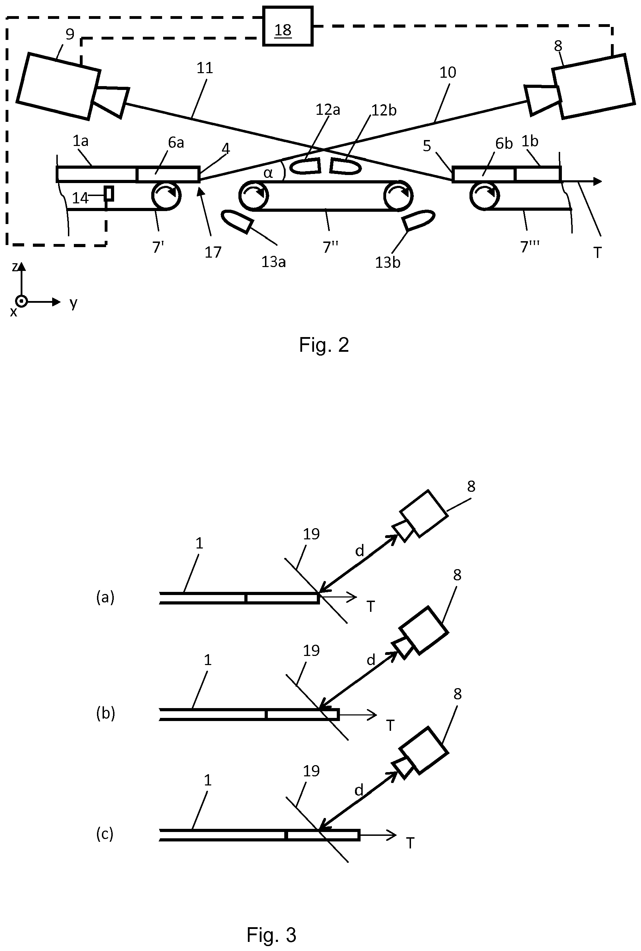

Preferably, imaging of flat object with the imaging system is performed from an observation path whose optical axis encloses with the transport direction an observation angle $\alpha$ of less than 60 degrees, preferably less than 30 degrees, more preferably less than 15 degrees, wherein observation angle $\alpha$ is defined in a plane which is perpendicular to the plane of flat object and which is preferably parallel to the transport direction. This allows an optimum observation and imaging of the trailing portion and/or leading portion of flat object and a reliable detection of geometrical defects of the edges. Making the angle larger reduces the visibility of defects on the bottom side of the wafers, while making the angle smaller will augment the speed the wafer travels towards the camera, thus reducing the number of images that can be taken and thus the resolution on the z-direction as defined in figure 2. The observation path is that path along which the object is observed, i.e. the observation path starts from the flat object (or from transport path) and extends towards the camera or towards a mirror deflecting the observation path towards the camera.

Preferably, the observation angle $\alpha$ is larger than 5 degrees, preferably larger than 8 degrees, more preferably larger than 10 degrees. Ideally the angle lies in the range from 10 to approximately 12 degrees, preferably around 11 degrees. This further allows an arrangement, in which the imaging system is located above or below the transport path preventing flat object from clashing with the imaging system. Furthermore, the edges are imaged nearly frontally.

Preferably, the frame rate of the imaging system when taking sequentially the plurality of images is between 500 Hz and 10 kHz, preferably between 1 kHz and 5 kHz. This allows an accurate imaging of the series of pictures and at the same time a relative high velocity of the objects during their movement through the focal plane.

Preferably, the depth of field of the imaging system is less than about 3 mm, preferably less than 1,5 mm, such as 1,2 mm, when taking the plurality of images. Sharp pixels are such obtained from object points lying within the depth of field.

Preferably, the imaging system comprises a line scan camera, and wherein the orientation of the line of the line scan camera is parallel to the plane of transport path or the plane of flat object, and wherein preferably the orientation of the line of the line scan camera is perpendicular to the transport direction. Preferably, the line of the line scan camera is essentially parallel to the leading edge and/or trailing edge of flat object. If the (line scan) camera is arranged symmetrical to the transport direction and/or the wafer edges, the capability of recognizing defects will be constant for the complete wafer edge and chamfer respectively.

Preferably, the plurality of images taken sequentially are combined to one image by means of selecting from the plurality of images image data, which were taken from object points of flat object within the depth of field of the imaging system, and wherein preferably the combined image is used for evaluating defects of flat object. This has to be understood in that sense that the relative position of the data point (pixels) to each other is known or determined during evaluation. The pixels of that 'one image' need not be ordered that way nor be displayed as a visible image. However, outputting and/or displaying and/or storing a real image is/are of course possible and relate(s) to a preferred embodiment(s).

Preferably, digital image processing, preferably checking brightness and/or contrast and/or sharpness of the images, is used for the step of selecting from the plurality of images image data, which were taken from object points of flat object within the depth of field of the imaging system. According to this embodiment sharp parts of the image are extracted to be used for evaluation, while blurred parts of the image are not taken into account for evaluation of defects.

Preferably, information about the distance between the imaging system and the object points of flat object is used for the step of selecting from the plurality of images image data, which were taken from object points of flat object within the depth of field of the imaging system. This allows a reliable and simple evaluation.

Preferably, the information about the distance between the imaging system and the object points of flat object is obtained by means of a stereo camera and/or a Time-of-Flight (ToF) camera. Here, the at least one imaging system for taking sequentially the plurality of images may comprise the functionality of a stereo camera and/or a Time-of-Flight (ToF) camera.

Preferably, the information about the distance between the imaging system and the object points of flat object is obtained by means of a position sensor and/or by means of speed information of flat object along the transport direction and/or by means of the known shape of the flat object.

Preferably, the leading edge and/or the trailing edge and/or the lateral edges of the flat object are illuminated to a greater extent than the front side and/or the back side of flat object. This allows to easily extract relevant pixels of the edges from whole image data, since other object portions appear dark.

Preferably, at least during the step of taking sequentially a plurality of images of the leading portion and/or trailing portion flat object is moved at a constant velocity along the transport direction, wherein preferably the velocity is between 50 mm/s and 500 mm/s. This allows a time-efficient inspection of objects.

The above ways of identifying the relevant data in the image may be combined in any desirably way. A geometrical consideration may e.g. reduce the data that has to be tested on sharpness or brightness, thus reducing the work load and enabling a higher throughput.

Preferably, transporting flat object along a transport path is done by means of a conveyor belt. The conveyor belt may consist of multiple parts so that it is not seen by the camera (Fig. 2). It may also be locally guided out of/away from the transport path so that it is imaged less sharp or is less illuminated.

Preferably, especially when using line scan cameras, imaging of the leading portion of flat object is done with a first camera and the imaging of the trailing portion is done by a second camera.

Preferably, wherein the step of taking sequentially a plurality of images is triggered by means of a sensor, e.g. a light barrier, a mechanical switch, an inductive sensor or a capacitive sensor, placed along the transport path, wherein preferably the sensor is a position sensor detecting the position of flat object along the transport path.

The object of the invention is also achieved by means of an inspection system as defined in claim 15.

Preferably, the inspection system comprises a mirror arrangement having at least one mirror surface deflecting the observation path towards the imaging system, wherein the mirror arrangement is arranged above or beneath the transport path and extends transversely to he transport direction.

Due to the inventive solution the flat objects do not clash with the cameras during the front side and back side edge inspection. To avoid object/wafer stresses, also a further handling procedure e.g. the rotating procedure in the Yasunaga system is not necessary any more to reliably inspect the leading portion and the trailing portion of flat object. Further embodiments of the invention are indicated in the figures and in the dependent claims. The list of reference marks forms part of the disclosure. The invention will now be explained in detail by the drawings. In the drawings:

Fig. 1 shows a flat semiconductor object having a geometrical defect on a chamfer to be detected by means of the inventive method,

Fig. 1a shows two geometrical defects on the edge of a square wafer

Fig. 2 shows an embodiment of the inspection system according to the invention,

Fig. 3 shows the step of taking sequentially a plurality of images of flat object during the movement of flat object along the transport path,

Fig. 4 shows a plurality of images with relevant pixels which were taken from object points of the flat object within the depth of field of the imaging system,

Fig. 5 shows a combined image build up from selected pixel data of the plurality of images,

Fig. 6 shows the object plane of the imaging system intersecting the leading edge of flat object,

Fig. 7 shows the object plane of the imaging system intersecting a leading portion of flat object at the level of a chamfer,

Fig. 8 shows the object plane of the imaging system intersecting a leading portion of flat object behind the chamfer.

Fig. 9 shows an embodiment of the inspection system in top view,

Fig. 10 shows the start of a scanning procedure at the lower line of the leading edge,

Fig. 11 shows the scanning of the upper line of the leading edge,

Fig. 12 shows geometrical relations of object plane and flat object,

Fig. 13 shows a combined image of a leading edge of a pseudo square wafer and

Fig. 14 shows a light path difference between imaging lower line of edge and upper line of chamfer.

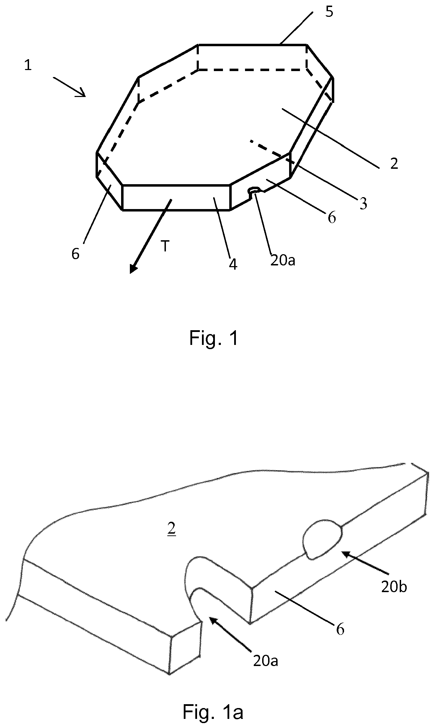

Fig. 1 shows an example of a flat semiconductor object 1, such as a pseudo square wafer or solar cell, to be inspected by means of the inspection method according to the invention. The inspected flat object may also be round (semi-conductor wafer), a fullsquare wafer or have any other shape. The flat object 1 in form of a wafer has a front side 2, a back side 3, a leading edge 4, a trailing edge 5 (both defined with respect to the longitudinal transport direction T) and a chamfers 6, one of which with a geometrical defect 20a.

Fig. 1a shows in more details two defects 20a, 20b. Defect 20 a can be readily seen by looking in a direction perpendicular to the plane of the wafer (plane wafer extends in). Defect 20b is visible from above while being invisible from below the wafer plane. Depending on how the wafer is placed on the conveyor belt (front side 2 up or front side 2 down), defect 20b may be seen or not. The inventive system sees defect 20b regardless of the orientation of the wafer with a camera system on one side of the wafer that images the defect sharp enough, regardless of its position, to be recognized.

Fig. 2 shows a setup of an inspection system according to the invention. A wafer 1a is transported on a conveyor belt having individual conveyor belt sections 7', 7", 7'" along transport path 17 in longitudinal transport direction T. A first camera sensor 8 (first imaging system) observes a leading portion of wafer 1a starting at the lower portion of its leading edge 4. A second camera sensor 9 (second imaging system) observes a trailing portion of wafer 1b ending with the lower portion of its trailing edge 5. The edges 4, 5 have a slanted portion 6a, 6b, respectively. The optical axes of the observation optical paths 10, 11 extend between the camera sensors 8, 9 and the wafers 1a, 1b, respectively.

Upper and lower illumination means 12a, 12b, 13a, 13b, particularly lamps, are provided to illuminate the edges of the wafers 1a, 1b while not illuminating the upper surface seen by the camera and preferably also not illuminating surfaces of any other objects seen by the cameras. The transportation system is divided in multiple conveyer belts 7', 7", 7'" so that the wafer edges 4, 5 extend freely when they are imaged with the camera sensors 8, 9. This makes it easier to isolate the relevant pixels from the images.

A position sensor 14 such as a light barrier (through beam, retro-reflective or proximitysensing), an inductive or capacitive sensor or a mechanical sensor, is placed underneath (or alternative: above or laterally from) the conveyer belt 7'. It senses when a wafer 1a, 1b arrives and thus triggers the respective camera sensor 8, 9 at the right moment. Evaluation unit 18 unit handles the (delayed) triggering. The position sensor 14 and the camera sensors 8, 9 are connected to a controller/evaluation unit 18 for controlling at least the steps of:

- taking subsequently a series of images of flat object 1 during movement of flat object 1 along the transport path 17,

- for selecting from the series of images those image data (pixels), which were taken from object points of the flat object 1 within the depth of field (DOF) of the camera sensors 8, 9, and

- for evaluating defects 20a, 20b of flat object 1 essentially by means of the selected image data (pixels).

Evaluation unit 18 may comprise a storage for storing the digital images and image data, a digital signal processor for digitally processing the images and extracting - as good as possible - the relevant (sharp) pixels taken from object points within DOF from the (blurred) pixels taken from object points outside DOF of the imaging system.

The observation optical path 10 and the longitudinal transport direction T or transport path 17 make an observation angle $\alpha$. Making observation angle $\alpha$ as small as possible ensures a good symmetrical view on the wafer edge(s) and thus a better visibility of the defects 20b (Fig. 1a). Symmetrical meaning that it does not matter if the wafer lies on its front (top) or on its back (bottom) side. It was however found that making $\alpha$ small also has negative effects. If observation angle $\alpha$ were zero, the path P travelled by the wafer from the time the first pixels was taken to the time the last pixel was taken equals $v_w/f$, with $v_w$ the speed of the wafer toward the camera and f the frame rate (images taken per unit of time). Since the wafer moves toward the camera this distance also is the difference in the length of the optical axis, meaning that not all pixels on the wafer edge are in focus. It was found that an observation angle $\alpha$ of smaller than 15 degrees, preferably approximately 10-12 degrees, gives particularly good results in combination with a velocity of flat object 1 between 50 mm/s and 500 mm/s, preferably approximately 220mm/s, and a frame rate between 1kHz to 10kHz, preferably 4kHz.

With the above mentioned wafer speed (220mm/s), frame rate (4kHz) and observation angle $\alpha$ (10°-12°), the edge of a 155μm thick wafer is scanned 14 time (14 line images of the edge). With a 200μm wafer 18 images can be taken.

Fig. 3 shows three positions (a), (b) and (c) of a flat semiconductor object 1 relative to the camera sensor 8 during the step of taking sequentially a plurality of images. The camera sensor 8 is looking down onto the flat object 1. As the flat object 1 reaches the position shown in (a), a picture of at least a portion of the leading edge 4 is taken. Preferably, a line scan image sensor is used to obtain high frame rates and high resolution so that multiple images are taken of the leading and trailing edge. The distance d between the camera sensor 8 and the imaged part of the flat object 1 is indicated by the double-arrow. During the step of taking sequentially a series of images flat object 1 moves through the object plane 19 (or focal plane) which is distanced from the camera sensor 8 by a given distance d.

In position (b) the flat object 1 has moved and a next image is taken. Since only the pixels of object points at a given distance d to the camera sensor 8 are used for evaluation, the depth of field (also the depth of sharpness) of the optical system can be (very) limited. In the situation shown in (b) the leading portion of the chamfer 6 is imaged sharply. In the situation shown in (c) the middle portion of the chamfer 6 is imaged sharply.

Fig. 4(a), (b) and (c) schematically show the images 15 taken in Fig. 3 (a), (b) and (c). In the images 15 the relevant/sharply image regions 16 with pixels taken from the edges of flat object 1 are shown. The edge portions, indicated in Fig. 4 as relevant regions 16, were located in the DOF during imaging and appear sharp. Fig. 4 (d) shows all relevant pixels of the images in Fig. 4 (a) to (c) combined in one image.

Fig. 5 shows a composite image 15 comparable to that of Fig. 4 (d). The main difference is that the images are placed on top of each other. The lower lines in the image 15 are taken before the higher lines. The vertical direction thus is a time scale, each new row of the image 15 being a next time step. The steps depend on the frame rate of the image system and the speed of the flat object 1 along the transport path 17. Since in the embodiment of Fig. 2 only the edges of the flat object 1 are illuminated these pixels appear brighter than the rest of the pixels.

The shape of the edge as shown in Fig. 5 strongly depends on the frame rate of the camera sensor 8 (doubling the frame rate stretches the image by a factor two) and the speed of the wafer (doubling the speed contracts the image by a factor two). These parameters can be chosen to fulfill the requirements.

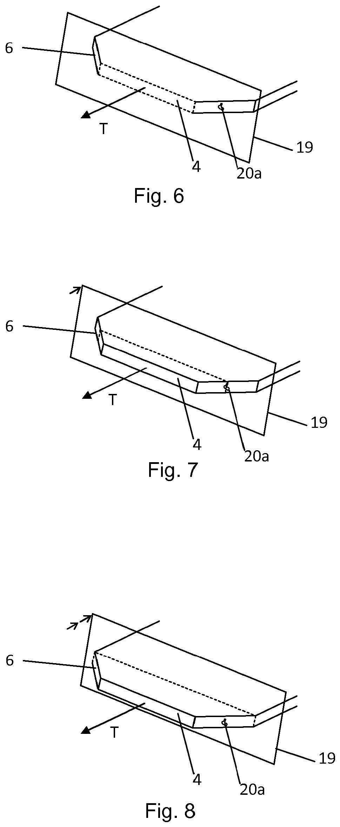

Figs. 6, 7 and 8 show again the principle of the invention. Fig. 6 shows the object plane 19 of the imaging system (e.g. camera sensor 8 or 9) intersecting the leading edge 4 of flat object 1 (the object plane making an angle $\alpha + 90°$ with the plane of the wafer). Continuous movement of flat object 1 along the transport direction T leads to the situations shown in Fig. 7 and 8. Fig. 7 shows the object plane 19 of the imaging system intersecting a middle portion of chamfer 6 at the level of a geometrical defect 20a. Fig. 8 shows the object plane 19 of the imaging system intersecting a trailing portion of chamfer 6 behind the geometrical defect 20a.

The illumination (as shown in Fig. 2) of the edges may be done by:

• illuminating the edges parallel to the plane of the flat object 1. In that way no light impinges on the surface of the flat object 1. The light beams may also converge from the surface as long as they do not illuminate the surface of the flat object 1; or

• illuminating the flat object 1 from the side opposite to the side the camera sensor 8, 9 is on. Again the plane surface of the flat object seen by the camera sensor 8, 9 is not illuminated; or

- a combination of the both

The portions of the conveyor system as seen by the imaging system should not be illuminated either and preferably have dark colors or be outside of the DOF. Ambient light may be shielded so that an even better contrast is achieved.

To stress the flat objects, e.g. wafers, as little as possible, the images shall be taken while the flat object is moving with a constant speed (e.g. 220mm/s). That means the camera sensors 8, 9 need an input to do the snap shot at the right time. As described above this may done in the present application for inspecting the leading and the trailing edges with a position sensor 14, e.g. a light barrier, which is installed between the two sides of the transporting means, e.g. conveyor belt 7.

In the measurement process, the leading edge 4 of flat object 1 passes the position sensor 14, e.g. light barrier, the signal state of the light barrier changes from low to high and a first timer (timer for the snap shot of the leading edge 4) and a second timer (timer for snap shot of the trailing edge 5) begins to count up the time. When the time of the first timer is equal to an adjusted (first) time, the camera sensor 8 gets the input to trigger the first snap shot of the leading edge 4. When the time of the second timer is equal to an adjusted (second) time, the camera sensor 9 gets the input to trigger the first snap shot of the trailing edge 5. The time(s) for the timer(s) may be adjustable in a parameter map. Once the first image is taken, images are taken continuously until the leading edge/trailing edge and the chamfers have passed. This may be done based on the known shape of the wafers and their known speed or the sensor 14 or a comparable second sensor (not shown) may be used.

Due to the fact that the snap shot is done while the flat object 1 is moving with a constant speed, the exposure time of the camera sensors 8, 9 must be small enough, say 100µs to avoid smearing effects and thus enough illumination is needed. Preferably, all pixels are illuminated at the same time (no rolling shutter).

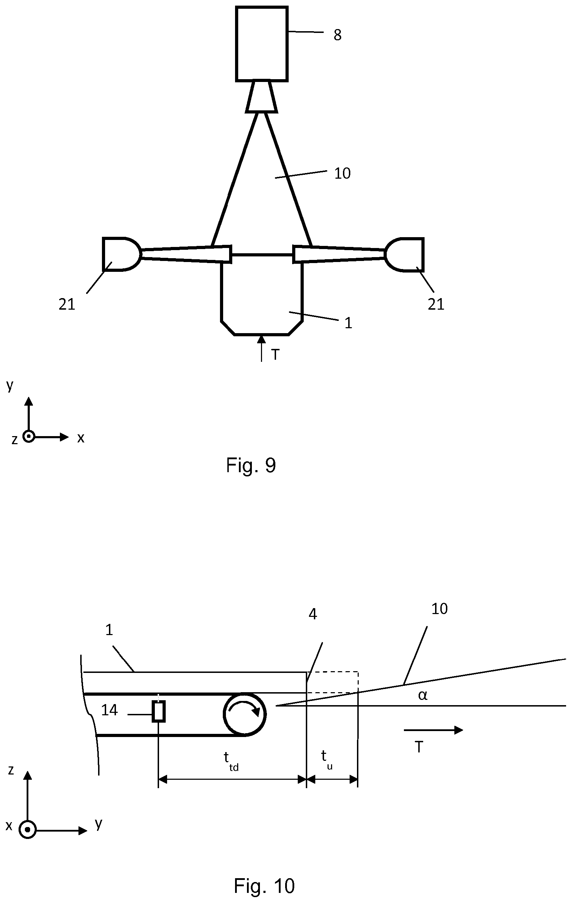

Figs. 9 to 14 show preferred aspects of the invention. In order to detect chippings or breakages located on the leading edge 4 and trailing edge 5 as well as on the leading and trailing chamfers, two line scan cameras and are mounted above the transport path 17 (x-y-plane). To scan the leading edge 4 and the leading chamfers, the line scan camera is mounted in reverse transport direction T with an angle $\alpha$ to y-direction, angle $\alpha$ being defined in the y-z-plane. The trailing edge 5 and the trailing chamfers are scanned by the line scan camera 8 in transport direction T with the observation angle $\alpha$ relative to the y-direction. The CCD line sensor extends horizontally in x-direction. The leading and trailing edges 4 and 5 are illuminated by diffuse light from the top and bottom illumination 12a, 12b and/or 13a, 13b (Fig. 2).

Figure 9 shows in a top view an alternate (or additional) arrangement of illumination means 21 arranged laterally from the transport means and thus laterally from the flat objects 1 to be inspected. As can be seen in Figure 9, the left and right chamfer illumination means 21 are aligned (in x-direction) rectangular to the transport direction T. Figure 9 shows the illumination of the leading portion of flat object 1. The illumination alignment for the trailing portion would be the same.

Image capture: Because the line scan cameras (camera sensors 8, 9) are mounted stationary, possibly each with the same observation angle $\alpha$ to the transport direction T (x-y-layer), the flat objects 1, e.g. silicon photovoltaic wafers, have to be transported with continuous speed on an even conveyor belt to generate 2-dimensional images of the leading and trailing edges 4, 5 as well as of the leading and trailing chamfers.

Figure 10 shows the start of the image exposure of the first image of the series of images that will be made from this leading edge and leading chamfer. When the position sensor 14 detects the leading edge 4 of the flat object 1 and an appropriate trigger delay time $t_{td}$ is expired, the line scan camera (camera sensor 8) starts to take a 2-dimensional image by stringing together the single line scan images with the line frequency $f_l$. After a further time range $t_u$ the observation optical path 10 of the line scan camera meets the leading edge 4 and at this point the scan of the leading edge 4 begins at the bottom border of the leading edge 4. As more and more images are taken, the complete leading edge and leading chamfers are imaged.

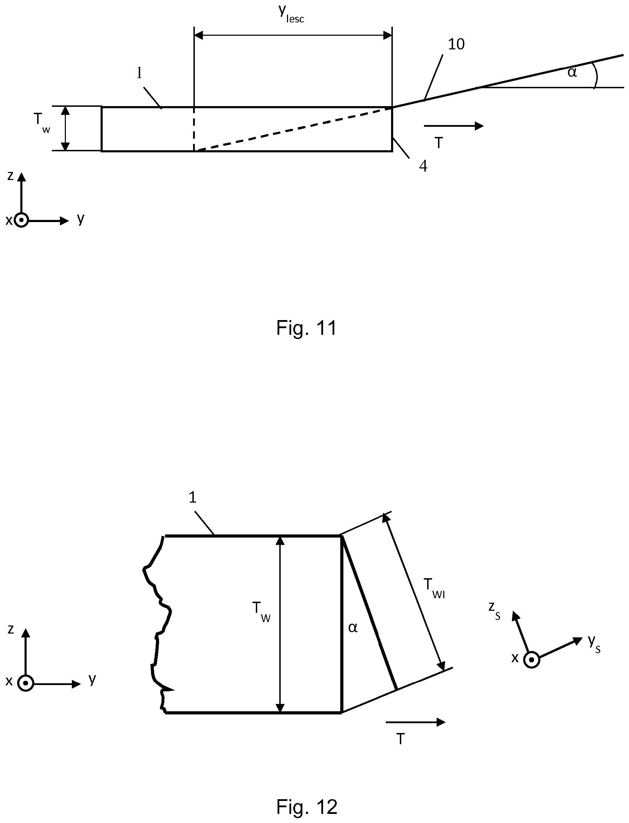

Figure 11 shows the scan of the upper wafer edge. Due to the combination of the continuous wafer transport in y-direction (i.e. transport direction T) and the beveled alignment of the 2-dimensional visual field of the line scan camera to the x-y-layer, a 2-dimensional image of the wafer edge is recorded. To scan the whole leading edge 4 with the corresponding chamfer, the flat object 1 has to pass the track $y_{lesc}$, starting from the situation shown in Figure 11. The images of the lower portion of the leading edge have been taken already in the situation shown in Fig. 11.

The scan process for the trailing edge 5 is exactly the same, mirrored to the x-z-layer.

The description of the wafer edge scanning procedure shows, that the image resolution in z-direction depends on the following parameters:

observation angle $\alpha$,

line trigger frequency $f_l$ of the line scan camera(s) (camera sensors 8, 9),

rate of feed (velocity $v_w$) of the flat object 1.

Due to the fact, that the object or focal plane 19 is tilted with the angle $\alpha$ to the x-z-plane, angle $\alpha$ lying in

a z-y-plane, the edge 4 (or 5) is represented with a smaller thickness $T_{wl}$: $T_{wl}=T_w \cos\alpha$ ($T_w$ is the thickness of the object; see Figure 12). Thus also the factor cosa has to be considered for the evaluation of the resolution in $z_s$-direction (tilted coordinate system). Figure 12 shows that influence of the camera orientation on the wafer edge display.

Taking into account all the above mentioned parameters, the pixel resolution $r_{zs}$ in $z_s$- direction can be evaluated as follows:

$$r_{ZS} = \frac{v_W \cdot sin\alpha}{f_l} \cdot cos\alpha$$

(i.e: $r_{zs}=(v_w \cdot sin\alpha)/f_l \cdot cos\alpha$)

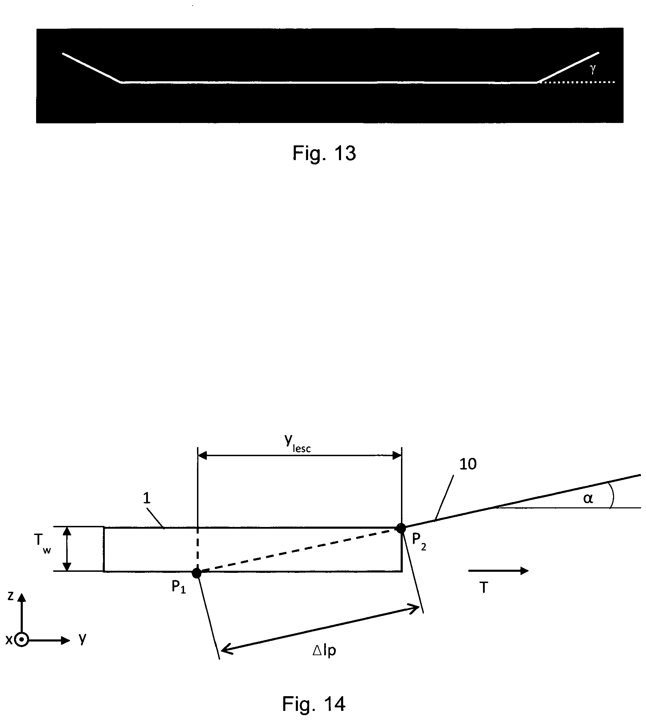

The principle for scanning the leading and trailing wafer chamfers is the same as the one for scanning the leading and trailing edges 4, 5. But as the visual field of the line scan camera is tilted by the angle $\alpha$ to the x-y-layer and crosses the wafer chamfers which are additionally slanted by e.g. 45° to the x-z-layer, the wafer chamfers are displayed with an angle y (Fig. 13) to the leading and trailing edge 4, 5 respectively.

In the situation shown in figure 14, the observation optical paths associated to the pixels on the line scan extend over the complete leading edge 4 and over both chamfer 6. This means that there is a difference in the length from the camera to P2 on the leading edge 4 and the distance from the camera to the 'last' point P1 of the chamfer. If all pixels were to be imaged sharply, a depth of view of at least Δlp would be required (according to prior art). This would make the optical system required much too costly. The inventive system allows imaging of the complete leading (and/or trailing) edge and chamfers 6 sharply with normal, commercially available optical systems and cameras.

By selecting only the sharp pixels of the taken images and making one image out of them, the depth of sharpness can be made such that defects 20a, 20b on the leading and/or trailing edges 4, 5 and the chamfers 6 can be recognized.

Depending on the way the sharp pixels are found in the image data, data points of the top surface of the flat object 1 may be used for inspection as well. If e.g. the pixels of the edge of the flat object 1 are much brighter than those of the top of flat object 1, the pixels of the top side however are imaged with enough contrast; those pixels may be used to do any desired evaluation. If the edge pixels can be found effectively using other methods such as by means of the geometrical shape of the flat object 1, the pixels of the top and the edges and the chamfers may be illuminated as to appear in the same brightness range.

The invention is not restricted to the embodiments shown. Single or multiple combinations thereof are possible.

List of reference signs

| | |
|---|---|
| 1 | flat object |
| 1a, 1b | First and second wafer |
| 2 | Front side of flat object 1 |
| 3 | Back side of flat object 1 |
| 4 | Leading edge |
| 5 | Trailing edge |
| 6 | slanted edge or chamfer |
| 7', 7", 7''' | Conveyor belt |
| 8 | First camera sensor |
| 9 | Second camera sensor |
| 10 | Observation path |
| 11 | Observation path |
| 12a, 12b | Upper illumination means |
| 13a, 13b | Lower illumination means |
| 14 | Position sensor |
| 15 | Image |
| 16 | Region with relevant pixels |
| 17 | transport path |
| 18 | evaluation unit |
| 19 | object plane of the imaging system |
| 20a, 20b | First and second defect |
| 21 | lateral illumination means |
| d | Distance from camera sensor to flat object |
| T | Transport direction |

Claims

1. Inspection method for inspecting flat semiconductor objects (1), such as wafers, solar cells or intermediate stages thereof, in respect of defects (20a, 20b), comprising defects on edges (4, 5, 6) of flat object (1), said inspection method comprising the steps of:

- transporting flat object (1) along a transport path (17) in a transport direction (T), the transport movement defining a leading edge (4) and a trailing edge (5) of flat object (1),
- taking sequentially a plurality of images of flat object (1), particularly of a leading portion and/or a trailing portion of flat object (1), during the movement of flat object (1) along the transport path (17) with at least one imaging system (8, 9), preferably a camera, wherein the plurality of images comprises image data, which were taken from object points of the flat object (1) within the depth of field of the imaging system (8, 9), and image data which were taken from object points of the flat object (1) outside of the depth of field of the imaging system (8, 9),
- selecting from the plurality of images the image data, which were taken from object points of the flat object (1) within the depth of field of the imaging system (8,9),

- recognizing defects (20a, 20b) of flat object (1) essentially by means of the selected image data, wherein

  the image data that were taken from object points outside of the depth of field of the imaging system (8, 9)

  or

  a main part of the image data, that were taken from object points outside of the depth of field of the imaging system (8, 9)

  are not taken into account for evaluation of the defects (20a, 20b) of flat object (1).

2. Inspection method according to claim 1, wherein the object plane (19) of the imaging system (8, 9) is tilted with respect to the plane of the transport path (17) or plane of flat object (1) during the movement of flat object (1) along the transport path (17).

3. Inspection method according to claim 1 or 2, wherein imaging of flat object (1) with the imaging system (8, 9) is performed from an observation path (10, 11) whose optical axis encloses with the transport direction (T) an observation angle (a) of less than 60 degrees, preferably less than 30 degrees, more preferably less than 15 degrees, wherein observation angle (a) is defined in a plane which is perpendicular to the plane of flat object (1) and which is preferably parallel to the transport direction (T).

4. Inspection method according to claim 3, wherein the observation angle (a) is larger than 5 degrees, preferably approximately 10 to12 degrees.

5. Inspection method according to one of the preceding claims, wherein the depth of field of the imaging system (8, 9) is less than 3 mm, preferably less than 1,5 mm, more preferably about 1,2 mm, when taking the plurality of images.

6. inspection method according to one of the preceding claims, wherein the imaging system (8, 9) comprises a line scan camera, and wherein the orientation of the line of the line scan camera is parallel to the plane of transport path (17) or the plane of flat object (1), and wherein preferably the orientation of the line of the line scan camera is perpendicular to the transport direction (T).

7. Inspection method according to one of the preceding claims, wherein the plurality of images taken sequentially are combined to one image by means of selecting from the plurality of images image data, which were taken from object points of flat object (1) within the depth of field of the imaging system (8, 9), and wherein preferably the combined image is used for recognizing defects (20a, 20b) of flat object (1).

8. Inspection method according to one of the preceding claims, wherein digital image processing, preferably checking brightness and/or sharpness and/or contrast of the images, is used for the step of selecting from the plurality of images image data, which were taken from object points of flat object (1) within the depth of field of the imaging system (8, 9).

9. Inspection method according to one of the preceding claims, wherein information about the distance between the imaging system (8, 9) and the object points of flat object (1) is used for the step of selecting from the plurality of images image data, which were taken from object points of flat object (1) within the depth of field of the imaging system (8, 9).

10. Inspection method according to claim 9, wherein the information about the distance between the imaging system (8, 9) and the object points of flat object (1) is obtained by means of a stereo camera and/or a Time-of-Flight (ToF) camera.

11. Inspection method according to claim 9 or 10, wherein the information about the distance between the imaging system (8, 9) and the object points of flat object (1) is obtained by means of a position sensor (14), or by means of speed information of flat object (1) along the transport direction (T), or by means of the known shape of the flat object (1), or by any combination thereof.

12. Inspection method according to one of the preceding claims, wherein the leading edge (4) and/or the trailing edge (5) and/or the lateral edges of the flat object (1) are illuminated to a greater extent than the front side (2) and/or the back side (3) of flat object (1), and preferably than any other object in the image.

13. Inspection method according to one of the preceding claims, wherein at least during the step of taking sequentially a plurality of images of the leading portion and/or trailing portion flat, the object (1) is moved at a constant velocity along the transport direction (T), wherein preferably the velocity is between 50 mm/s and 500 mm/s.

14. Inspection method according to one of the preceding claims, wherein the step of taking sequentially a plurality of images is triggered by means of a sensor (14), e.g. a light barrier, a mechanical switch, an inductive sensor or a capacitive sensor, placed along the transport path (17), wherein preferably the sensor (14) is a position sensor detecting the position of flat object (1) along the transport path (17).

15. Inspection system for inspecting flat semiconductor objects (1), such as wafers, solar cells or intermediate stages thereof, in respect of defects (20a, 20b), particularly chamfers or slanted edges, wherein said inspection system comprises:

- transport means (7) for transporting flat object (1) along a transport path (17) in a longitudinal transport direction (T), the transport movement defining a leading edge (4) and a trailing edge (5) of flat object (1),
- at least one imaging system (8, 9) adapted to take sequentially a plurality of images of flat object (1), particularly of a leading portion and/or a trailing portion of flat object (1), during the movement of flat object (1) along the transport path (17),
- evaluation unit (18) adapted to select from the plurality of images the image data, which were taken from object points of the flat object (1) within the depth of field of the imaging system (8, 9) and to recognize defects (20a, 20b) of flat object (1) essentially by means of the selected pixel data,

and wherein said inspection system is configured to perform the inspection method accordin to one of the preceding claims.

**Patentansprüche**

1. Inspektionsverfahren zur Inspektion von flachen Halbleiterobjekten (1), wie zum Beispiel Wafer, Solarzellen oder Zwischenstufen davon, in Bezug auf Defekte (20a, 20b), die Defekte an Rändern (4, 5, 6) des flachen Objekts (1) umfassen, wobei das Inspektionsverfahren die folgenden Schritte umfasst:

- Transportieren eines flachen Objekts (1) entlang eines Transportpfades (17) in einer Transportrichtung (T), wobei die Transportbewegung einen vorlaufenden Rand (4) und einen nachlaufenden Rand (5) des flachen Objekts (1) definiert,
- sequentielles Aufnehmen mehrerer Bilder des flachen Objekts (1), insbesondere eines vorlaufenden Abschnitts und/oder eines nachlaufenden Abschnitts des flachen Objekts (1), während der Bewegung des flachen Objekts (1) entlang des Transportpfades (17) mit mindestens einem Bildgebungssystem (8, 9), bevorzugt einer Kamera, wobei die mehreren Bilder Bilddaten, die von Objektpunkten des flachen Objekts (1) innerhalb der Tiefenschärfe des Bildgebungssystems (8, 9) genommen wurden, und Bilddaten, die von Objektpunkten des flachen Objekts (1) außerhalb der Tiefenschärfe des Bildgebungssystems (8, 9) genommen wurden, umfassen,
- Auswählen der Bilddaten, die von Objektpunkten des flachen Objekts (1) innerhalb der Tiefenschärfe des Bildgebungssystems (8, 9) genommen wurden, aus den mehreren Bildern,
- Erkennen von Defekten (20a, 20b) des flachen Objekts (1) im Wesentlichen anhand der ausgewählten Bilddaten, wobei
die Bilddaten, die von Objektpunkten außerhalb der Tiefenschärfe des Bildgebungssystems genommen wurden (8, 9),
oder
ein Hauptteil der Bilddaten, die von Objektpunkten außerhalb der Tiefenschärfe des Bildgebungssystems (8, 9) genommen wurden,
bei der Auswertung der Defekte (20a, 20b) des flachen Objekts (1) nicht berücksichtigt werden.

2. Inspektionsverfahren nach Anspruch 1, wobei die Objektebene (19) des Bildgebungssystems (8, 9) während der Bewegung des flachen Objekts (1) entlang des Transportpfades (17) in Bezug auf die Ebene des Transportpfades (17) oder Ebene des flachen Objekts (1) geneigt ist.

3. Inspektionsverfahren nach Anspruch 1 oder 2, wobei die Bildgebung des flachen Objekts (1) mit dem Bildgebungssystem (8, 9) von einem Beobachtungspfad (10, 11) aus erfolgt, dessen optische Achse mit der Transportrichtung (T) einen Beobachtungswinkel (α) von weniger als 60 Grad, bevorzugt weniger als 30 Grad, besonders bevorzugt weniger als 15 Grad einschließt, wobei der Beobachtungswinkel (α) in einer Ebene definiert ist, die senkrecht zu der Ebene des flachen Objekts (1) ist und die bevorzugt parallel zur Transportrichtung (T) ist.

4. Inspektionsverfahren nach Anspruch 3, wobei der Beobachtungswinkel (α) größer als 5 Grad, bevorzugt etwa 10 bis 12 Grad, ist.

5. Inspektionsverfahren nach einem der vorangehenden Ansprüche, wobei die Tiefenschärfe des Bildgebungssystems (8, 9) bei der Aufnahme der mehreren Bilder weniger als 3 mm, bevorzugt weniger als 1,5 mm, besonders bevorzugt etwa 1,2 mm, beträgt.

6. Inspektionsverfahren nach einem der vorangehenden Ansprüche, wobei das Bildgebungssystem (8, 9) eine Zeilenkamera umfasst, und wobei die Ausrichtung der Zeile der Zeilenkamera parallel zu der Ebene des Transportpfades (17) oder der Ebene des flachen Objekts (1) ist, und wobei bevorzugt die Ausrichtung der Zeile der Zeilenkamera senkrecht zur Transportrichtung (T) ist.

7. Inspektionsverfahren nach einem der vorangehenden Ansprüche, wobei die mehreren sequentiell aufgenommenen Bilder zu einem Bild kombiniert werden, indem aus den mehreren Bildern Bilddaten ausgewählt werden, die von Objektpunkten des flachen Objekts (1) innerhalb der Tiefenschärfe des Bildgebungssystems (8, 9) genommen wurden, und wobei bevorzugt das kombinierte Bild zum Erkennen von Defekten (20a, 20b) des flachen Objekts (1) verwendet wird.

8. Inspektionsverfahren nach einem der vorangehenden Ansprüche, wobei für den Schritt des Auswählens der Bilddaten, die von Objektpunkten des flachen Objekts (1) innerhalb der Tiefenschärfe des Bildgebungssystems (8, 9) genommen wurden, aus den mehreren Bildern eine digitale Bildverarbeitung, bevorzugt eine Überprüfung der Helligkeit und/oder der Schärfe und/oder des Kontrasts der Bilder, verwendet wird.

9. Inspektionsverfahren nach einem der vorangehenden Ansprüche, wobei für den Schritt des Auswählens der Bilddaten, die von Objektpunkten des flachen Objekts (1) innerhalb der Tiefenschärfe des Bildgebungssystems (8, 9) genommen wurden, aus den mehreren Bildern Informationen über die Distanz zwischen dem Bildgebungssystem (8, 9) und den Objektpunkten des flachen Objekts (1) verwendet werden.

10. Inspektionsverfahren nach Anspruch 9, wobei die Informationen über die Distanz zwischen dem Bildgebungssystem (8, 9) und den Objektpunkten des flachen Objekts (1) mittels einer Stereokamera und/oder einer Time-of-Flight (ToF)-Kamera erhalten werden.

11. Inspektionsverfahren nach Anspruch 9 oder 10, wobei die Informationen über die Distanz zwischen dem Bildgebungssystem (8, 9) und den Objektpunkten des flachen Objekts (1) mittels eines Positionssensors (14) oder mittels der Geschwindigkeitsinformationen des flachen Objekts (1) entlang der Transportrichtung (T) oder mittels der bekannten Form des flachen Objekts (1) oder durch eine Kombination davon erhalten werden.

12. Inspektionsverfahren nach einem der vorangehenden Ansprüche, wobei der vorlaufende Rand (4) und/oder der nachlaufende Rand (5) und/oder die seitlichen Ränder des flachen Objekts (1) stärker beleuchtet werden als die Vorderseite (2) und/oder die Rückseite (3) des flachen Objekts (1), und bevorzugt stärker beleuchtet werden als jedes andere Objekt im Bild.

13. Inspektionsverfahren nach einem der vorangehenden Ansprüche, wobei mindestens während des Schrittes des sequentiellen Aufnehmens mehrerer Bilder des vorlaufenden Abschnitts und/oder des nachlaufenden Abschnitts das flache Objekt (1) mit einer konstanten Geschwindigkeit entlang der Transportrichtung (T) bewegt wird, wobei die Geschwindigkeit bevorzugt zwischen 50 mm/s und 500 mm/s liegt.

14. Inspektionsverfahren nach einem der vorangehenden Ansprüche, wobei der Schritt des sequentiellen Aufnehmens mehrerer Bilder mittels eines Sensors (14), zum Beispiel einer Lichtschranke, eines mechanischen Schalters, eines induktiven Sensors oder eines kapazitiven Sensors, ausgelöst wird, der entlang des Transportpfades (17) angeordnet ist, wobei der Sensor (14) bevorzugt ein Positionssensor ist, der die Position eines flachen Objekts (1) entlang des Transportpfades (17) detektiert.

15. Inspektionssystem zur Inspektion von flachen Halbleiterobjekten (1), wie zum Beispiel Wafer, Solarzellen oder Zwischenstufen davon, in Bezug auf Defekte (20a, 20b), insbesondere Fasen oder schräge Ränder, wobei das Inspektionssystem umfasst:

   - ein Transportmittel (7) zum Transportieren eines flachen Objekts (1) entlang eines Transportpfades (17) in einer longitudinalen Transportrichtung (T), wobei die Transportbewegung einen vorlaufenden Rand (4) und einen nachlaufenden Rand (5) des flachen Objekts (1) definiert,
   - mindestens ein Bildgebungssystem (8, 9), das dafür ausgelegt ist, während der Bewegung des flachen Objekts (1) entlang des Transportpfades (17) nacheinander mehrere Bilder des flachen Objekts (1), insbesondere eines vorlaufenden Abschnitts und/oder eines nachlaufenden Abschnitts des flachen Objekts (1), aufzunehmen,
   - eine Auswertungseinheit (18), die dafür ausgelegt ist, aus den mehreren Bildern die Bilddaten, die von Objektpunkten des flachen Objekts (1) innerhalb der Tiefenschärfe des Bildgebungssystems (8, 9) genommen wurden, auszuwählen und Defekte (20a, 20b) des flachen Objekts (1) im Wesentlichen anhand der ausgewählten Pixeldaten zu erkennen,

und wobei das Inspektionssystem dafür konfiguriert ist, das Inspektionsverfahren nach einem der vorangehenden Ansprüche auszuführen.

## Revendications

1. Procédé d'inspection pour des objets semiconducteurs plats (1), tels que des tranches, des cellules solaires ou des stades intermédiaires de ceux-ci, quant à des défauts (20a, 20b), comprenant des défauts sur des bords (4, 5, 6) d'un objet plat (1), ledit procédé d'inspection comprenant les étapes suivantes :

- transport d'un objet plat (1) le long d'un trajet de transport (17) dans une direction de transport (T), le déplacement de transport définissant un bord avant (4) et un bord arrière (5) de l'objet plat (1),
- prise séquentielle d'une pluralité d'images de l'objet plat (1), en particulier d'une partie avant et/ou d'une partie arrière de l'objet plat (1), pendant le déplacement de l'objet plat (1) le long du trajet de transport (17) avec au moins un système d'imagerie (8, 9), de préférence une caméra, la pluralité d'images comprenant des données d'image prélevées à partir de points d'objet de l'objet plat (1) dans la profondeur de champ du système d'imagerie (8, 9), ainsi que des données d'image prélevées à partir de points d'objet de l'objet plat (1) à l'extérieur de la profondeur de champ du système d'imagerie (8, 9) ,
- sélection, parmi la pluralité d'images, des données d'image prélevées à partir de points d'objet de l'objet plat (1) dans la profondeur de champ du système d'imagerie (8, 9),
- détection de défauts (20a, 20b) de l'objet plat (1) essentiellement à l'aide des données d'image sélectionnées, où

les données d'image ont été prélevées à partir de points d'objet à l'extérieur de la profondeur de champ du système d'imagerie (8, 9),
ou
une majeure partie des données d'image prélevées à partir de points d'objet à l'extérieur de la profondeur de champ du système d'imagerie (8, 9)
n'est pas prise en compte pour l'évaluation des défauts (20a, 20b) de l'objet plat (1).

2. Procédé d'inspection selon la revendication 1, dans lequel l'objet plat (19) du système d'imagerie (8, 9) est incliné par rapport au plan du trajet de transport (17) ou au plan de l'objet plat (1) pendant le déplacement de l'objet plat (1) le long du trajet de transport (17).

3. Procédé d'inspection selon la revendication 1 ou 2, dans lequel l'imagerie de l'objet plat (1) avec le système d'imagerie (8, 9) est effectuée à partir d'un trajet d'observation (10, 11) dont l'axe optique forme, avec la direction de transport (T), un angle d'observation (a) inférieur à 60 degrés, de préférence inférieur à 30 degrés, plus préférentiellement inférieur à 15 degrés, l'angle d'observation (a) étant défini dans un plan perpendiculaire au plan de l'objet plat (1) et de préférence parallèle à la direction de transport (T) .

4. Procédé d'inspection selon la revendication 3, dans lequel l'angle d'observation (a) est supérieur à 5 degrés, de préférence d'environ 10 à 12 degrés.

5. Procédé d'inspection selon l'une des revendications précédentes, dans lequel la profondeur de champ du système d'imagerie (8, 9) est inférieure à 3 mm, de préférence inférieure à 1,5 mm, plus préférentiellement d'environ 1,2 mm, lors de la prise de la pluralité d'images.

6. Procédé d'inspection selon l'une des revendications précédentes, dans lequel le système d'imagerie (8, 9) comprend une caméra à balayage linéaire, et dans lequel l'orientation de la ligne de la caméra à balayage linéaire est parallèle au plan du trajet de transport (17) ou au plan de l'objet plat (1), et dans lequel l'orientation de la ligne de la caméra à balayage linéaire est de préférence perpendiculaire à la direction de transport (T).

7. Procédé d'inspection selon l'une des revendications précédentes, dans lequel la pluralité d'images prises séquentiellement est combinée en une image par sélection, parmi la pluralité d'images, des données d'image prélevées à partir de points d'objet de l'objet plat (1) dans la profondeur de champ du système d'imagerie (8, 9), et dans lequel l'image combinée est utilisée de préférence pour la détection de défauts (20a, 20b) de l'objet plat (1) .

8. Procédé d'inspection selon l'une des revendications précédentes, dans lequel un traitement d'image numérique, de préférence une vérification de la luminosité et/ou de la netteté et/ou du contraste des images, est utilisé(e) pour l'étape de sélection, parmi la pluralité d'images, de données d'image prélevées à partir de points d'objet de l'objet plat (1) dans la profondeur de champ du système d'imagerie (8, 9).

9. Procédé d'inspection selon l'une des revendications précédentes, dans lequel des informations concernant la distance entre le système d'imagerie (8, 9) et les points d'objet de l'objet plat (1) sont utilisées pour l'étape de sélection, parmi la pluralité d'images, de données d'image prélevées à partir de points d'objet de l'objet plat (1) dans la profondeur de champ du système d'imagerie (8, 9) .

10. Procédé d'inspection selon la revendication 9, dans lequel les informations concernant la distance entre le système d'imagerie (8, 9) et les points d'objet de l'objet plat (1) sont obtenues à l'aide d'une caméra stéréo et/ou d'une caméra à temps de vol (ToF).

11. Procédé d'inspection selon la revendication 9 ou 10, dans lequel les informations concernant la distance entre le système d'imagerie (8, 9) et les points d'objet de l'objet plat (1) sont obtenues à l'aide d'un capteur de position (14), ou à l'aide d'informations de vitesse de l'objet plat (1) le long de la direction de transport (T), ou à l'aide de la forme connues de l'objet plat (1), ou par toute combinaison de ces éléments.

12. Procédé d'inspection selon l'une des revendications précédentes, dans lequel le bord avant (4) et/ou le bord arrière (5) et/ou les bords latéraux de l'objet plat (1) sont éclairés davantage que le côté avant (2) et/ou le côté arrière (3) de l'objet plat (1), et de préférence que tout autre objet dans l'image.

13. Procédé d'inspection selon l'une des revendications précédentes, dans lequel au moins pendant l'étape de prise séquentielle d'une pluralité d'images de la partie avant et/ou la partie arrière, l'objet plat (1) est déplacé à une vitesse constante le long de la direction de transport (T), dans lequel la vitesse est de préférence comprise entre 50 mm/s et 500 mm/s.

14. Procédé d'inspection selon l'une des revendications précédentes, dans lequel l'étape de de prise séquentielle d'une pluralité d'images est déclenchée à l'aide d'un capteur (14), par exemple une barrière lumineuse, un interrupteur mécanique, un capteur inductif ou un capteur capacitif, placé(e) le long du trajet de transport (17), dans lequel le capteur (14) est de préférence un capteur de position détectant la position de l'objet plat (1) le long du trajet de transport (17).

15. Système d'inspection pour l'inspection d'objets semiconducteurs plats (1), tels que des tranches, des cellules solaires ou des stades intermédiaires de ceux-ci, quant à des défauts (20a, 20b), en particulier des chanfreins ou des bords inclinés, ledit système d'inspection comprenant :

    - un moyen de transport (7) destiné à transporter un objet plat (1) le long d'un trajet de transport (17) dans une direction de transport (T), le déplacement de transport définissant un bord avant (4) et un bord arrière (5) de l'objet plat (1),
    - au moins un système d'imagerie (8, 9) adapté pour la prise séquentielle d'une pluralité d'images de l'objet plat (1), en particulier d'une partie avant et/ou d'une partie arrière de l'objet plat (1), pendant le déplacement de l'objet plat (1) le long du trajet de transport (17),
    - une unité d'évaluation (18) adaptée pour la sélection, parmi la pluralité d'images, de données d'image prélevées à partir de points d'objet de l'objet plat (1) dans la profondeur de champ du système d'imagerie (8, 9) et pour la détection de défauts (20a, 20b) de l'objet plat (1) essentiellement à l'aide des données de pixel sélectionnées,

et dans lequel ledit système d'inspection est configuré pour mettre en œuvre le procédé d'inspection selon l'une des revendications précédentes.

Fig. 1

Fig. 1a

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

**EP 2 781 912 B1**

**REFERENCES CITED IN THE DESCRIPTION**

**Patent documents cited in the description**

- EP 1348947 A1
- DE 202004020330 U1
- WO 2007144671 A1
- WO 2006093381 A1
- WO 20060933S1 A1
- EP 11191122 A
- US 20110263049 A1
- US 6201899 B1
- DE 102009010837 A1
- US 8023110 B1
- US 20030179369 A1